# EUROPEAN PATENT SPECIFICATION

(11) **EP 1 758 066 B1**
(45) Date of publication and mention of the grant of the patent: **27.08.2008**
(21) Application number: 06466011.1
(22) Date of filing: 16.08.2006
(51) Int. Cl.: G08G 1/123

(54) **Arrangement of an vehicle unit OBU with an identification protection unit to prevent unauthorized use**
Anordnung einer Fahrzeug OBU mit einer Einheit zum Schutz der Identifizierung, zur Vermeidung einer unerlaubten Verwendung
Arrangement d'une unité de bord avec une unité de protection d'identification pour éviter un usage non-autorisé

(30) Priority: 23.08.2005 CZ 20050528
(43) Date of publication of application: 28.02.2007
(73) Proprietor: Telematix s.r.o., 180 00 Praha 8 (CZ); TELwork s.r.o., 293 01 Mladá Boleslav (CZ)
(72) Inventor: Svitek, Miroslav, 339 01 Klatovy 4 (CZ); Sindelar, Libor, 190 00 Praha 9 (CZ)
(74) Representative: Spacek, Jindrich

(56) References cited:
- EP-A- 0 982 685
- KR-A- 20040 053 485

## Description

### Technical Field

The present invention relates to the arrangement of the vehicle unit OBU in the telematic system with a secured telematic identifier for a safe and verifiable monitoring of a transport element, e.g. truck, articulated vehicle, container, goods etc., which move within the traffic infrastructure that is applied in particular for electronic payment systems for the use of the traffic infrastructure (e.g. electronic toll, clearance systems) as well as for the security and control of all systems for transporting people and goods.

### Background Art

Current systems for the identification of transport elements in the traffic infrastructure and the security and control systems for the transport of people and goods are, up to now, based on the intelligence of the vehicle unit OBU (On-Board Unit - OBU), which is either not linked to the transport element by any reliably verifiable means or is only linked by a mechanical means, for example by a seal, or it is linked electronically with the electronic system of the transport element, for example via the CAN bus. If there is no linkage between the vehicle unit OBU and the transport element, then the movement of such an element within the traffic infrastructure cannot be reliably proven.

For this reason it is necessary to set up a costly system for monitoring and verifying the characteristic data of transport elements during their movement within the traffic infrastructure, for example for the identification of number plates, vehicle classification and an examination of the vehicle unit OBU. That brings increased requirements on the creation of a rigid structure for monitoring and inspection points built up along the communication paths that connect the individual monitoring and inspection points with the supervising and control centres.

In the case of the mechanical link between the vehicle unit OBU and the transport element it is necessary to undertake a complex and time consuming assembly operation, which is organizationally and financially burdensome.

In the case of the electronic link between the vehicle unit OBU and the electronic system of the transport element, it is necessary to know the detailed description of the communication interface of the connection point and the characteristics of the data to be transmitted that have to be submitted by different manufacturers for each transport element type. It is necessary to ensure system integrity, including guarantees. For this reason a service network covering the whole traffic infrastructure requires setting up to undertake the actual installation of the vehicle unit OBU into the transport elements. The proper assembling process requires a high degree of skill and is time consuming.

Since in neither of the above defined methods of linkage is the security of the whole system guaranteed nor secured, the individual systems of linkage between the vehicle unit OBU and the transport element can easily be disturbed and thus brought into a condition where the system functionality or integrity would be impaired. Likewise, it is not possible to prove that the updating of the distributed software modifications (SW) and data bases (tariffs, geographical data etc.) has been done in the vehicle unit OBU through the supervising and control centre in which the transport element is registered.

The system functionality based on up-to-date software and valid data can not therefore be guaranteed and that is why a thorough verification of the whole system is always necessary in order to identify each defective or intentionally impaired OBU. The solution is very complicated, expensive and hardly effective. That proves, strictly speaking, that a reliable identification of the position or movement of the transport element in the traffic infrastructure (distance sections, sectors etc.) through the operation of the intelligent vehicle unit OBU is either not possible or is vulnerable. The said vehicle units OBU are single purpose-oriented, while having a high purchasing and operation cost and it is not possible to use this device in other telematic applications especially if common and affordable means of communication or location devices are to be used (PDA, mobile phone etc.).

A telematic system using a smart card to identify the collect and legal toll collection process is known from the Korean Patent Application KR-A-20040053485, see the abstract.

### Nature of the Invention

The object of the present invention is to eliminate the disadvantages described above by the arrangement of the vehicle unit OBU in the telematic system, in particular, for transport elements. This elimination is based on the fact that for identification purposes, a physically separated identification protection unit is assigned to the vehicle unit OBU through a communication interface and this identification protection unit is safely mechanically secured to the transport element or a part of it (electronic registration key, identification system of the vehicle for example based on the automatic emergency system e-Call, black box of the transport element etc.), and which represents, together with the vehicle unit OBU and the control logic, a secured telematic identifier of the transport element for its clear and provable identification and the position identification or the driven-off distance or sector in connection with supervising and control centres that are equipped with data bases of the identification protection units in order to have these units compared in the control logic of at least one supervising and control centre.

By the present solution, the movement of the identifiable transport elements including goods within the traffic infrastructure can be monitored securely and reliably so that the weak points can be eliminated. This results in a substantial reduction of the requirements presented by the proper hardware (HW) solution of both application and system of the traffic-oriented telematics. The system solution can be enhanced with information coming from the position systems and from other reference data related to the transport element, vehicle and shipment information or to the traffic infrastructure (identification of the driven-off distance, region identification etc.) that are also picked up, and, in connection with the safe and reliable identification, the conditions for design of new applications and telematic traffic systems will be provided.

According to the present invention, the identification protection unit furthermore features a number of protection elements which are able to recognize an irregular use of the secured telematic identifier, as for example intentional damage, unauthorized interference in the telematic system, theft, action aimed at confusing the system or any other interference resulting in the improper operation of the whole telematic system and at the same time, it makes possible a fast installation for the consequent activation and use of the secured telematic identifier and simultaneously, it grants the security, integrity and protection of the transport element, and for this reason the identification protection unit and/ or the control logic are equipped with a micro chip with security codes and special keys with specific cryptologic functions and as well as with unique recognition, classification, and identification data of the transport element and/or with characteristics of the shipment or its parts. With this unique solution it is very difficult to disturb the integrity of the system or to negatively affect the system or to impair the information capability of the applications. This solution will be transferred into the structure of the whole telematic application. The use of this solution, especially in the applications that have system-dependent requirements (security, accessibility, reliability, integrity etc.) e.g. with payment systems, systems securing movement of transport elements within the traffic infrastructure, electronic toll collection systems etc. will make new simple hardware solutions and easy software solutions possible.

Based on the identification protection unit that reliably identifies the transport element, the secured telematic identifier can be connected to at least one supervising and control centre via a communication protocol through any freely selected mobile phone network operator. The particularly accurate, provable and secure identification together with the technical solution makes it possible to use the services of different operators of the public telecommunication networks even for the applications with higher system requirements.

The secured telematic identifier can be securely coupled with further identifiers and, in this way, the security code that characterizes the whole chain with its elements that are able to identify individual system violators and where the security code can contain the codes of particular people (for example fingerprints, EEG, etc.), or codes of vehicle parts, UN codes of dangerous loads, codes of the processes, functions, etc. can be generated. The more elements the given telematic chain possesses, the more complex is the common linkage of the secured telematic identifier with these elements and the more efficient is the security level of the whole chain man (humans), vehicle (s), shipment (s), supervising and control centre (s), functions, processes, etc., which the secured telematic identifier can ensure.

The invention is thus applicable to all applications which need a reliable identification of the movement of an identifiable transport element through an exactly defined geographical section/ region within a defined time interval, such as for example in a system of the electronic toll-paying infrastructure, or movement control of the transport element in the traffic infrastructure, whereby these actions are to be carried out by the supervising and control centres using a secured and provable electronic identification.

### Description of the Figures in the Drawings

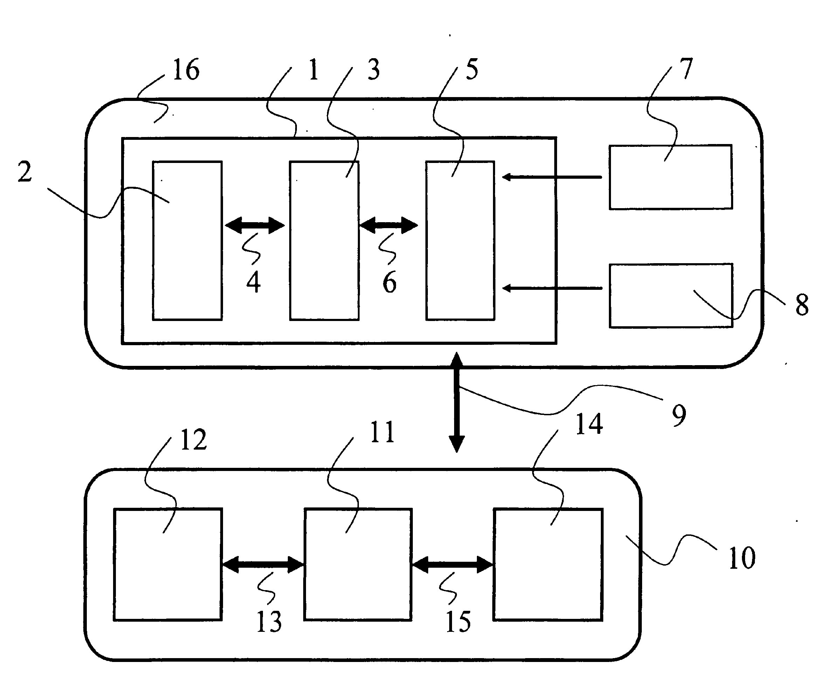

Further benefits and effects of the present invention will be further explained when consideration is given to the following drawing thereof where the figure shows a block diagram of the layout of the secured telematic identifier in connection with the vehicle unit OBU and a link to the supervising and control centre.

### Example of Carrying Out of the Invention

The secured telematic identifier will now be described in principle with reference to the example shown below. This description in no way limits the possibility of similar solutions being proposed by specialists that arise obviously from the present description, for example applications with other types of vehicle units (OBU) or other supervising and control centres etc.

The secured telematic identifier **1,** which is built in the transport element **16**, consists of the identification protection unit **2**, the control logic **3** of the secured telematic identifier **1**, the logic link **4** to the vehicle unit OBU **5** of any technical and technological solution with different level of intelligence. The vehicle unit OBU **5** usually processes information from the different position identification systems **7** and possibly from further reference identifiers **8**. The mutual linkage between the logic control logic **3** of the telematic identifier **1** and the vehicle unit OBU **5** is achieved by the electronic communication interface **6**. The secured telematic identifier **1** describes reliably and provably the transport element **16**, including the mechanical and electronic securing of the data integrity and protection as well as of the functions, processes, software and the like.

The secured telematic identifier **1** communicates via a secured communication protocol **9** with the supervising and control centres **10** that consist of the control logic **11** and data bases **12** of the identification protection units **2**, and that include also the link **13** between the control logic centre **11** with data bases **12** and the communication link **15** with other supervising and control systems **14,** which co-operate with the control logic **11** of the supervising and control centre **10**. The supervising and control centres **10** securely process and evaluate information coming from all secured telematic identifiers **1** and provide, for example, their management in telematic jobs, such as 'integrity breaking' reports of a vehicle unit OBU **5**, reports of breaks in individual processes and communication links, software or data integrity breaking reports, and the like.

The individual blocks described above are explained as follows:

The secured telematic identifier **1** incorporates the control logic **3** of the secured telematic identifier **1,** which is interconnected, logically and through the information interchange, with the intelligent identification protection unit **2** that is firmly and inseparably incorporated in the transport element **16**. The arrangement of the identification protection unit **2** can be chosen alternatively inside or outside or on a component of the transport element **16** that is not easily detachable or on components which are indispensable for the proper operation and function due to their functionality or appropriate use of the transport element **16** or which are prescribed by legislation. The secured telematic identifier **1** identifies reliably the transport element **16** and thus also the vehicle unit OBU **5** and therefore it is possible to use the services of different telecommunication operators in the same way as selecting a SIM card of the GSM network in mobile phones.

The proper communication of the identification protection unit **2** with the control logic **3** runs under the logic link **4,** whereas with the vehicle unit OBU **5** of the transport element **16** runs by means of the electronic communication interface **6** in a way that the control logic **3** of the secured telematic identifier **1** is able to process the information from the vehicle unit OBU **5** and from the identification protection unit **2** and use them for coding, encrypting, secured processing and communication with supervision and control systems **14** of the supervising and control centres **10**. Thus the security superstructure of the electronic vehicle units OBU **5** of the transport elements **16** and supervising and control systems **14** is achieved, and the possibility of the adequate autonomous operation of the vehicle unit OBU **5** is guaranteed even with reduced requirements on the supervising and control centre infrastructure **10**.

The identification protection unit **2** contains a micro chip with security codes and special keys with specific cryptologic functions and unique recognition, classification, and identification data of the transport element **16,** for example a unique serial number of the micro chip, identification and classification of the transport element **16,** characteristics and codes of important components of the transport element **16,** shipment characteristics and other characteristic and identification information, as for example container type or recipient of transported goods etc. The identification protection unit **2** with its micro chip is further characterized by a number of protection elements which detect an irregular use of the secured telematic identifier **1,** as for example an intentional damaging, unauthorized interference in the telematic system, theft, action aimed at confusing the system or any other interference resulting in improper operation of the whole telematic system. The identification protection unit **2** can be installed very quickly with consequent activation and use of the secured telematic identifier **1** and simultaneously, it grants security, integrity and protection of the transport element **16.**

The control logic **3** of the secured telematic identifier **1** contains algorithms for monitoring of dysfunctions resulting from the intentional or accidental impairment of the functionality of the whole telematic system between transport element **16,** secured telematic identifier **1,** supervising and control centre **10** and identification protection unit **2,** whereby it uses the information from the identification protection unit **2** and from the vehicle unit OBU **5** of the transport element **16,** as for example data bases of historically identified distance sections or sectors of the infrastructure, position information transferred from the position identification system **7** or further information transferred from the reference identifiers **8**, as for example information from the accelerometer, time information, space information, process information etc. To this information the identifiers of the shipment can furthermore be attached as well as motor, driver, other persons, and time identifiers, verification identifiers, crosscheck identifiers for enhancing the safety of the secured telematic identifier **1** such as active and passive balises, or for example biological parameters of persons, way-bills, movement characteristic detectors for the transport element **16,** presence detection of the radio signals etc. The control logic **3** provides a high-grade security, integrity, availability and reliability in order to guarantee the functions and processes executed by the vehicle unit OBU **5** together with the supervising and control centre **10** via the secured communication protocol **9**.

The logic link **4** of the secured telematic identifier **1** contains tools for the electronic communication between the control logic **3** and the identification protection unit **2**, whereby the communication concept is adapted to the character of the transport element **16,** or, as the case may be, to the transport function, and the link is characterized by a variety of electrical energy transfer modes for the identification protection unit **2,** as for example inductive transfer, radio or laser based transfer, infrared , RFID, and the like whereas another method is based on supplying the power for the identification protection unit **2** mechanically from the mains of the transport element **16,** or from own battery cells. The proper information transfer can be designed in a similar way - by a contactless solution and/or by a contact based special bus and the like.

The vehicle unit OBU **5,** which represents a part of the transport element **16** usually contains a universal telematic unit with built-in data bases and software, which handles predefined processes and functions. It includes hardware elements for the processing of data obtained for example from the position identification system **7** that are represented for example by position identification systems GNSS, EGNOS, GALILEO, GSM, GPRS, DSRC, EIR, radio beacon or similar systems and the like, which determine the geographical identification of the vehicle unit OBU **5,** whereby individual processes, data, functions, and communication are secured and protected by means of the control logic **3** of the secured telematic identifier **1** and by means of the identification protection unit **2.** The secured telematic identifier **1** also carries out the operational check of the intelligent vehicle unit OBU **5** of the transport element **16** and monitors the character of the operation and integrity failures and in this way, it guarantees the authenticity of the processed data and also provides the method of protection for the up-link to the supervising and control centres **10**. With this solution, common available technologies can be used for the design of the vehicle unit OBU **5,** as for example mobile phone, PDA and the like, whereby the necessary security and integrity guarantee for the whole telematic system structure can be provided by the superstructure software of the secured telematic identifier **1** and in this way it would be possible to use the services of different telecommunication operators in the same way as selecting a SIM card of the GSM network in mobile phones.

The electronic communication interface **6** is characterized by the electronic information link between the intelligent vehicle unit OBU **5** and the control logic **3** of the secured telematic identifier **1** and this link is bidirectional.

The communication protocol **9** is a bidirectional communication between the transport element **16** with a built-in secured telematic identifier **1** and the supervising and control centres **10**, and is carried out within a chosen, usually open telecommunication environment, represented for example by the systems GSM, GPRS, WiFi, EDGE, and the like, whereby the proper information transmission is carried out by the identification protection unit **2** and the control logic **3** of the secured telematic identifier **1,** however with incorporated protection, correction, detection and security elements.

The supervising and control centre **10** represents server-based components of the individual telematic systems and provides their management and processing, as for example supervision, verification, control, monitoring and the like.

The control logic **11** of the supervising and control centre **10** represents algorithms for decoding, processing, and storage of the received information, including the identification of the intentional or accidental integrity impairment, with possible utilization for further telematic application of similar characteristic like the control logic **3** of the secured telematic identifier **1,** thus with available stored security and cryptologic functions and keys, whereby through this solution the high-grade security, availability, reliability and integrity of the telematic system is ensured, including the possibility of the telematic system impairment detection that is based on the inaccessibility of sensitive data for a system violator. It would be necessary, for a successful attack, to know the information both in the identification protection unit **2**, and in the data base **12** of the identification protection units **2**.

The data base **12** of the identification protection unit **2** is a data base providing the verification, authorization, and decoding of information obtained from the individual transport elements **16**, including the received identifiers of the individual processes, functions, historical data, and the like, so that the received information can be reconstructed and analyzed in the supervising and control centre **10**.

The link **13** between the control logic **11** and data base **12** of the identification protection units **2** includes a secured information transfer between the control logic **11** and data bases **12** of the identification protection units **2** for the processing or storing of the processed information and data in the supervising and control centre **10**.

The supervising and control systems **14** of the supervising and control centres **10** represent new or existing centres of the information processing for individual telematic applications of the telematic system. The communication link **15** between the control logic **11** and supervising and control systems **14** includes a mutual bidirectional information transfer.

### Industrial Applicability

### 1. Electronic toll systems

1.a) With the so-called radio (microwave, IR, and the like) system of the electronic toll, which is used for example in Austria, the use of the secured telematic identifier **1** will contribute to the reduction of the number of so-called monitoring gates. These gates are very expensive, require the implementation of the recognition system of vehicle licence plate for its reliable identification. These gates must be supplied with an electrical supply, including the necessary telecommunication environment. As far as secondary or vast traffic infrastructures are concerned, such gates become the limiting element of the whole system. With this known system (for example as a simple microwave identifier), the vehicle unit OBU **5** is not securely linked with the transport element **16**. It is only by means of the present proposed system of the secured telematic identifier **1** that it is securely linked with the transport element **16** and that is possible to incorporate in the vehicle unit OBU a recording system, which detects for example radio (microwave, IR, and the like) beacons that are arranged along the traffic infrastructure (this is often a very cheap beacon variant that radiates its identification without having to set up the camera monitoring system equipped with cryptologic system against misuse), and which records these events and which, after arriving at the monitoring system (the gate with camera system) or the toll collection place, offers the possibility to transfer the recorded data through radio or by means of a chip card, etc. into the billing or clearing system and the like. The paying system requires a high degree of reliability, safety, availability, and integrity of the whole chain consisting of the vehicle unit OBU **5** and the supervising and control centre **10**, and by means of the secured telematic identifier **1,** these demands can be satisfied and the specified parameters provided for the whole of the mentioned chain. The existing systems provide these parameters between the vehicle unit OBU **5** and the processing centre only, whereas the link vehicle - vehicle unit OBU is resolved by an expensive camera and monitoring system.

The suggested solution will essentially reduce the microwave toll system costs and facilitate its application both for the secondary and extended toll-paying infrastructures. One of the possible technical solutions for the toll system is to record data provided by the beacons along the traffic infrastructure into the data base of the vehicle unit OBU **5** including continual verification of the link integrity of the vehicle unit OBU **5** and identification protection unit **2**. Once the data base is full, the data that is encrypted by means of the identification protection unit **2** may be sent to the supervising and control centres **10**, which, as they know the identification protection unit **2** data (acquired by the vehicle registration) perform the information decoding for the purpose of electronic toll collecting. This information is further processed, geographical reference data is assigned to the beacon data and to the geographical object identifiers and then the charge for use of the traffic infrastructure by the particular vehicle is calculated (the specified identification code in the identification protection unit **2**).

1.b) With the so-called satellite system (GNSS/CN) for the electronic toll, which is used for example in Germany, the application of the secured telematic identifier **1** will contribute for example to the reduction of the installation time for the vehicle unit OBU **5**, where the assembly takes approximately 3 hours and represents a limiting factor for satellite system of the electronic toll because there is no possibility to take each vehicle out of operation and carry out the assembly on the spot. In order to prevent any vehicle discrimination (request for unit installation, waiting time for installation), dual systems of toll collecting are being set up (for example payments via internet, collection by toll booth etc.) and such alternative toll collection makes the electronic toll system substantially more expensive and reduces the effectiveness of the monitoring systems and satellite technology advantages that exist in the reduction of the density of the monitoring and checking gates. The secured link between the transport element **16** and the vehicle unit OBU **5**, based on installation of the identification protection unit **2**, where this identification protection unit **2** can be installed rapidly and once only during the vehicle / shipment registration (for example in the form of a special label, code, electronic licence plate, or based on e-call system, etc.), and where the coupled system of the vehicle unit OBU **5** only monitors and uses this identification protection unit **2** in the interest of the whole system security and integrity, and more over, there is also a possibility to install rapidly even a satellite system of the electronic toll, for example, on the frontier, to hire the vehicle unit OBU **5** that applies to the satellite system, etc. (identification protection unit **2** always remains the same - the hired vehicle unit OBU **5** will be interconnected with the identification protection unit **2,** whereby the hired unit employs the identification data from the identification protection unit **2**. Should the data be unavailable, or should a non conventional treatment be detected, the vehicle unit OBU **5** reports an error and the vehicle driver has to undertake certain organizational measures - for example to park the vehicle and demand the repair of the vehicle unit OBU **5** and the like). The intelligence of the secured telematic identifier **1** identifies every attempt to break the system integrity both from inside as well as from outside (for example through sending false satellite signals and the like) by using the comparison of information coming from satellite or radio beacons or from other sensors with the reference information and information from the identification protection unit **2**. The solution of the secured link between the vehicle unit OBU **5** and transport element 16 offers the possibility of employing commercially accessible technologies, for example PDA, mobile phone etc. for electronic toll collecting (the vehicle is equipped only with the secured telematic identifier **1** and with an inexpensive vehicle unit OBU **5**, which reads and records data for the electronic toll collecting, whereas for the communication, localisation or similar processes the conventional available systems can be used).

The suggested system solution does not require the implementation of a link between the vehicle unit OBU **5** and the vehicle bus (for example CAN), because every vehicle maker employs a different format and the bus protocol is its own property. The link between the vehicle unit OBU **5** and the CAN bus is replaced by the intelligence of the secured telematic identifier **1,** for example through implementation of an accelerometer and by using its data for the identification of a violation of the toll system integrity. One of the solutions is the connection of a mobile phone that is equipped with a GPS locator and special SW for the toll collecting with the special SIM card secured in the transport element **16**. Such a SIM card represents the identification protection unit **2**, whereby this unit will be for example equipped, unlike the conventional SIM cards, with a movement check, for example by a built-in accelerometer. As far as the proper communication is concerned, there is the possibility to use several SIM cards so that the mobile phone could be used universally or that the user could choose a telecommunication operator (SIM card) according to commercial criteria. If the movement of the transport element **16** is detected, for example by a built-in accelerometer, the mobile phone with a locator must be connected (if it is not so, an error is reported together with an attempt to break the system integrity). If the mobile phone with a locator GPS is connected, payments can be made and the SIM card provides their security and integrity.

1.c) The use of the secured telematic identifier for electronic toll systems brings not only the elimination of the essential disadvantages of existing systems (microwave and satellite), but even results in the definition of a new system based on all principles currently used:
- in the vehicle unit OBU **5** is identified, based on satellite data (GNSS, GPS, Galileo, EGNOS, etc.), a transit through a toll-paying segment and consequently the investigation is done via GNSS whether the transport element **16** has been moving in the specified segment (Yes/No) and in the specified time interval (for example 1s), and when this data is processed (hypothesis testing Yes/No, based on time series of measurements), if Yes, the segment/ region code will be recorded and this code can be subsequently completed with the determined driven-off distance and by financial information (reference data) whereas if the evaluation is No, the data is deleted),
- the vehicle unit OBU **5** is identified, based on beacon data, as having passed through a toll-paying region, for example at the starting or final point or within the toll-paying segment. There are cryptographically secured beacons that clearly define the driven-off geographical point and, based on this data, a code can be assigned to the segment/ region and this code can be subsequently completed with the determined driven-off distance and by financial information,
- supporting verification devices are installed in the vehicle unit OBU **5** and they check the data from GNSS and radio beacons or individual processes and the like, for example an accelerometer and the like.
- if all of the above mentioned information corresponds to each other then for example the segment/ region in the form of a code for toll-paying will be generated, and further the code of the transport element **16** (data from the identification protection unit **2**) and this data are either stored in the data base or sent directly to the supervising and control centre **10,** whereby an encrypting system based on the identification protection unit **2** data is used for the secured communication of the vehicle unit OBU **5** with the supervising and control centre **10**.

A new generation of the electronic toll system based on a secured telematic identifier **1** of the transport element **16** can be defined through the present solution, which provides an effective supervision and verification and in such a way the advantages of all existing systems electronic toll technologies can be exploited.

### 2. Further vehicle-oriented applications

Further applications concern vehicle black boxes, digital running recorders, electronic licence plate system (AVI, EVI, etc.), for example, whereby all these applications need a secured vehicle integrity in connection with the specified telematic application. According to said technical solution, the secured telematic identifier **1** resolves these requirements for all applications and, at the same time, provides the encrypting using the data from the identification protection unit **2**, and this data is known only by the supervising and control centre **10**, there through an effective and simple protection system will be set up that ensures the integrity of the chain (transport element **16** - the vehicle unit OBU **5** - supervising and control centre **10**), while simultaneously providing the protection of the personal data and other sensitive information. Data coming from the identification protection unit **2** can be used for verification and security of the particular processes of different telematic applications.

### 3. Vehicle movement and safety monitoring

This concerns an alternative to the electronic licence plate or other vehicle identification systems that have been described with the electronic toll system - such an identification contributes to the safe supervision for example of the vehicle speed etc., without using cameras to detect the licence plate. The system is applicable to all kinds of traffic: railway, shipment, combined transport, etc. In this way, for example, wagons can be counted, or movement of the transport element 16 secured.

### 4. Shipment movement and safety monitoring

It concerns a secured shipment identification (or possibly of several shipments) and, for example, verification whether dangerous items or substances, which increase the dangers associated with an accident, are not loaded together and the like, whereby it is based on so-called meaningless identifiers.

The above mentioned systems of telematic identifiers man (human identifiers can be for example a fingerprint, EEG, etc.), vehicle(s), loading (s), functions, processes, etc. can be linked by identification data and in this way the security code that characterizes the whole chain and that identifies individual system violators can be generated, and this code can even contain the codes of particular parts of the transport element **16**, UN codes of dangerous loadings, process and function codes, and the like. The more elements the specified telematic chain has, the more complex is the interconnection of the secured telematic identifier **1** with those elements and the higher is the security level of the whole chain man (humans), vehicle (s), shipment (s), supervising and control centre (s) **10**, functions, processes, etc., which the secured telematic identifier **1** can ensure.

## Claims

1. A telematic system, especially for transport elements, including a vehicle unit OBU, **characterised in that** a separated identification protection unit (2), which is safely mechanically secured to a transport element (16) is, by means of a communication interface (6) and a control logic (3), assigned to the vehicle unit OBU (5) and that said identification protection unit (2) constitutes, together with the vehicle unit OBU (5) and the control logic (3) a secured telematic identifier (1) of the transport element (16) for its clear and provable identification as well as position identification and/or for identification of the driven-through geographical segment / sector in connection with supervising and control centres (10), which are provided with a data base (12) of these identification protection units (2) in order to have these units compared by a control logic (11) of at least one supervising and control centre (10).

2. An arrangement of the vehicle unit OBU (5) according to claim 1, **characterised in that** the identification protection unit (2) contains a micro chip with security codes and special keys with specific cryptologic functions and unique recognition, classification, and identification data of the transport element (16) and/or shipment features.

3. An arrangement of the vehicle unit OBU (5) according to claims 1 and 2, **characterised in that** the identification protection unit (2) with a micro chip and/or control logic (3) contains protection elements for the detection of the non-conventional use of the secured telematic identifier (1).

4. An arrangement of the vehicle unit OBU (5) according to claim 1, **characterised in that** the secured telematic identifier (1) is connected to at least one supervising and control centre (10) via a communication protocol (9) through any freely selected mobile phone network operator.

## Patentansprüche

1. Die Anordnung einer OBU-Fahrzeugeinheit im telematischen System, vorzugsweise für die Verkehrs- und Transportelemente, **gekennzeichnet dadurch, dass** der OBU-Fahrzeugeinheit (5) mittels Kommunikationsschnittstelle (6) und Steuerlogik (3) eine physisch getrennte Identifikationsschutzeinheit (2) zugeordnet ist, die sicher mechanisch an das Verkehrs-Transportelement (16) fixiert ist und gemeinsam mit der OBU- Fahrzeugeinheit (5) und der Steuerlogik (3) einen telematischen Sicherheits-Identifikator (1) des Verkehrs-Transport-Elementes (16) bildet, für dessen eindeutige und erweisliche Identifikation und Bestimmung der Lage und/oder einer durchfahrenen geographischen Strecke/eines Sektors in Anbindung an die Überwachungs- und Steuerzentren (10), ausgestattet mit Dateibasen (12) dieser Identifikationsschutzeinheiten (2) zu deren Komparation in der Steuerlogik (11) von wenigstens einem Überwachungs- und Steuerzentrum (10).

2. Die Anordnung einer OBU-Fahrzeugeinheit (5) gemäß Anspruch 1, **gekennzeichnet dadurch, dass** die Identifikationsschutzeinheit (2) ein Mikrochip mit Sicherheitskodes und Chiffren mit kryptologischen Schlüsseln sowie einzigartige Erkennungs-, Klassifizierungs-und Identifizierungsdaten des Verkehrs-Transport-Elements (16) und/oder die Lastcharakteristik enthält.

3. Die Anordnung einerr OBU-Fahrzeugeinheit (5) gemäß Anspruch 1 und 2, **gekennzeichnet dadurch, dass** die Identifikationsschutzeinheit (2) mit Mikrochip und/oder die Steuerlogik (3) die Schutzelemente zur Erkennung der nicht standardisierten Verwendung des telematischen Sicherheits-Identifikators (1) enthält.

4. Die Anordnung einer OBU-Fahrzeugeinheit OBU (5) gemäß Anspruch 1, **gekennzeichnet dadurch, dass** der telematische Sicherheits-Identifikator (1) mittels Kommunikationsprotokolls (9) wenigstens an ein Überwachungs- und Steuerzentrum (10) über einen beliebig wählbaren Mobilnetzoperator angeschlossen ist.

## Revendications

1. Arrangement d'une unité de bord avec une unité de protection d'identification pour éviter un usage non-autorisé, en particulier pour les éléments de transport, **se caractérisant par** l'adjonction d'une unité de protection d'identification (2), physiquement séparée, à une unité de bord (5) par le moyen d'une interface de communication (6) et à travers une logique de commande (3), cette dernière étant mécaniquement fixée à l'élément de transport (16) et formant ensemble avec l'unité de bord (5) et la logique de commande (3) un identificateur télématique de sécurité (1) de l'élément de transport (16), destiné à son identification nette et probante ainsi qu'à la détermination de sa position et/ou du secteur géographique parcouru en liaison avec des centres de surveillance et de commande (10), équipés de bases de données (12) de ces unités de protection d'identification (2) en vue de leur comparaison dans la logique de commande (11) d'au moins un centre de surveillance et de commande (10).

2. Arrangement d'une unité de bord OBU (5) selon la revendication 1 **se caractérisant par le fait qu'**une unité de protection d'identification (2) contient une micropuce avec les codes et les chiffres de sécurité, basées sur les clés cryptographiques ainsi que des données uniques et distinctives de classification et d'identification de l'élément de transport (16) et/ou des caractéristiques de la charge.

3. Arrangement d'une unité de bord (5) selon les revendications 1 et 2 **se caractérisant par le fait qu'**une unité de protection d'identification (2) avec la micropuce et/ou la logique de commande (3) contient des éléments de protection pour détecter l'utilisation non standard de l'identificateur télématique de sécurité (1).

4. Arrangement d'une unité de bord (5) selon la revendication 1 **se caractérisant par le fait qu'**un identificateur télématique de sécurité (1) est connecté à l'aide du protocole de communication (9) à au moins un centre de surveillance et de commande (10) par le moyen d'un opérateur optionnel des réseaux mobiles.
